(19) Europäisches Patentamt
European Patent Office
Office européen des brevets

(11) Numéro de publication: 0 161 184 B1

(12) **FASCICULE DE BREVET EUROPEEN**

(45) Date de publication du fascicule du brevet: **12.04.89**

(51) Int. Cl.⁴: **B 29 C 41/28** // B29L7/00, B29K75:00

(21) Numéro de dépôt: **85400803.4**

(22) Date de dépôt: **24.04.85**

(54) **Procédé et dispositif pour la fabricatiom d'une couche de matière plastique de haute qualité optique.**

(30) Priorité: **02.05.84 FR 8406782**

(43) Date de publication de la demande: **13.11.85 Bulletin 85/46**

(45) Mention de la délivrance du brevet: **12.04.89 Bulletin 89/15**

(84) Etats contractants désignés: **AT BE CH DE FR GB IT LI LU NL SE**

(56) Documents cités:
**EP-A- 0 038 760**
**BE-A- 651 461**
**FR-A- 2 022 266**
**FR-A- 2 230 487**
**GB-A- 1 311 464**
**US-A- 4 373 672**

(73) Titulaire: **SAINT-GOBAIN VITRAGE, Les Miroirs 18, avenue d'Alsace, F-92400 Courbevoie (FR)**

(72) Inventeur: **Bravet, Jean-Louis, 5 Avenue du Moulin, F-60150 Thourotte (FR)**
Inventeur: **de Toytot, François, 15 Rue de Vogué, F-60150 Thourotte (FR)**
Inventeur: **Leyens, Gerd, Dr., Im Grünental 90, Aachen (DE)**
Inventeur: **Pikhardt, Siegfried, Hauptstrasse 137, Roetgen (DE)**
Inventeur: **Bayer, Herbert, von-Coels-Strasse 419, Aachen (DE)**

(74) Mandataire: **Muller, René et al, SAINT-GOBAIN RECHERCHE 39, quai Lucien Lefranc, F-93304 Aubervilliers (FR)**

EP 0 161 184 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention est relative à la fabrication d'une feuille de matière plastique, transparente, de haute qualité optique comprenant au moins une couche présentant notamment des propriétés de surface telles que résistance à la rayure et résistance à l'abrasion, pouvant être utilisée notamment en tant que couche de protection interne dans la fabrication de vitrages feuilletés, de préférence en étant associée au préalable à une couche de matière plastique présentant des propriétés d'absorbeur d'énergie. Par haute qualité optique, on entend selon l'invention la qualité optique répondant aux normes d'utilisation de la feuille dans un vitrage de véhicule automobile par exemple.

Des vitrages feuilletés de sécurité, utilisés notamment comme pare-brise de véhicule, comprenant un support rigide transparent en verre de silicate, une couche de matière plastique ayant des propriétés d'absorbeur d'énergie (couche AE) et une couche de revêtement en matière plastique ayant des propriétés de surface notamment de résistance à la rayure et à l'abrasion, dite couche de protection interne (coche PI), ont déjà été décrits dans plusieurs publications de brevets, par exemple dans les publications de brevets français FR-A 2 134 255, FR-A 2 398 606 ou encore dans la publication de brevet européen EP-A 0 054 491. La couche de recouvrement ayant des propriétés de surface utilisée dans ces vitrages feuilletés est par exemple celle décrite dans les publications de brevets français FR-A 2 187 719 et FR-A 2 251 608. Cette couche dite autocicatrisable, de laquelle des impressions superficielles disparaissent spontanément après un court laps de temps, a dans les conditions normales de température, une haute capacité de déformation élastique, un faible module d'élasticité, inférieur à 2000 daN/cm$^2$ et de préférence inférieur à 200 daN/cm$^2$, et un allongement à la rupture de plus de 60% avec moins de 2% de déformation plastique et de préférence un allongement à la rupture de plus de 100% avec moins de 1% de déformation plastique. Les couches préférées de ce type sont des polyuréthanes thermodurcissables ayant un module d'élasticité d'environ 25 à 200 daN/cm$^2$ et un allongement d'environ 100 à 200% avec moins de 1% de déformation plastique.

Pour fabriquer les vitrages feuilletés décrits ci-dessus, on prépare généralement au préalable une feuille à deux couches en formant tout d'abord une couche de polyuréthane thermodurcissable par coulée du mélange réactionnel des composants sur un support de coulée, et après polymérisation des monomères et formation d'une couche thermodurcissable d'épaisseur pouvant varier entre 0,1 et 0,8 mm en formant sur la première couche la seconde ayant des propriétés d'absorbeur d'énergie par coulée du mélange réactionnel des composants ou encore par extrusion d'une résine convenable déjà polymérisée.

La couche réactive sans solvant utilisée pour la fabrication de la couche de polyuréthane thermodurcissable nécessite pour l'obtention d'une haute qualité optique la fabrication d'une couche d'épaisseur supérieure 0,1 mm et de préférence supérieure à 0,2 mm.

Or il s'avère que des épaisseurs plus faibles de l'ordre de quelques dizaines de microns pourraient néanmoins satisfaire aux conditions demandées concernant les propriétés de surface telles la résistance à la rayure et la résistance à l'abrasion lorsqu'une telle couche recouvre une autre couche molle comme c'est le cas pour les vitrages feuilletés décrits ci-dessus où ladite couche ayant des propriétés de surface recouvre la couche AE.

D'un autre côté, la pulvérisation à l'aide de pistolets de pulvérisation qui pourrait être utilisée pour la formation d'un film de faible épaisseur, ne donne pas satisfaction car elle ne permet pas d'obtenir une couche d'épaisseur homogène et de bonne qualité optique, exempte de «peau d'orange». Ceci est dû notamment aux différences de viscosité des composants formant le mélange réactionnel à pulvériser. Ces différences de viscosité pourraient être attenuées par l'utilisation d'un solvant ou d'un mélange de solvants, mais alors d'autres problèmes se posent, notamment celui de l'évaporation du ou des solvants et des nuisances qui en découlent.

Dans un domaine technique différent de celui des couches transparentes pour vitrages feuilletés, on connaît d'après le document GB-A 1 311 464 une tête de pulvérisation centrifuge pour la pulvérisation d'un mélange de 2 peintures.

L'invention concerne un procédé de fabrication en continu d'une feuille en matière plastique utilisable dans les vitrages feuilletés, comprenant au moins une couche de faible épaisseur et de haute qualité optique selon te préambule de la revendication 1. Un tel procédé est décrit dans EP-A 0 038 760.

Cette couche est obtenue par pulvérisation centrifuge à grande vitesse d'un mélange de composants réactionnels sur un support plan horizontal animé d'un mouvement d'avance uniforme relatif par rapport à la pulvérisation, suivie d'un traitement assurant la polymérisation de la couche, selon l'invention le procédé est caractérisé en ce que l'apport du mélange réactionnel est effectué par pulvérisation centrifuge à l'aide d'une tête de pulvérisation tel un bol tournant à une vitesse comprise entre 1000 et 80000 tours/min, le mélange de composants réactionnels étant réalisé directement dans la tête de pulvérisation.

Sous un des aspects de l'invention, la feuille de matière plastique est formée essentiellement de la couche obtenue par pulvérisation. A cette fin, on utilise un support plan, horizontal, continu, duquel la surface adhère partiellement avec la matière susceptible de former la couche de façon que le déplacement du support provoque l'entrainement de la matière, on donne au support un mouvement d'avance uniforme relatif, on pulvérise sur le support le mélange de composants réactionnels par pulvérisation centrifuge à grande vitesse, on polymérise la couche formée qu'on retire du support.

Sous un autre aspect de l'invention, on forme de la même façon plusieurs couches successives par pulvérisation centrifuge d'un même mélange réactionnel ou de mélanges réactionnels différents afin, dans le premier cas, d'augmenter l'épaisseur de ladite feuille et d'en améliorer ses propriétés mécaniques ou, dans le deuxième cas, de former une feuille composite avec des propriétés désirées.

Sous un aspect avantageux de l'invention, la couche obtenue par pulvérisation centrifuge est une couche de protection interne (couche PI), qui au moment de sa fabrication est associée à une couche de matière plastique ayant des propriétés différentes, par exemple une couche ayant des propriétés d'absorbeur d'énergie (couche AE). On prépare ainsi une feuille à deux couches utilisable directement pour la fabrication de vitrages de sécurité du type décrit précédemment. Pour fabriquer une telle feuille à deux couches, on peut former d'abord la couche PI par pulvérisation centrifuge, puis la couche AE par coulée réactive comme décrit par la suite ou dans une variante par pulvérisation réactive, ou inversement, on forme d'abord la couche ayant des propriétés d'absorbeur d'énergie, puis la couche PI.

Lorsque l'on forme la couche par pulvérisation directement sur le support, l'adhérence de la matière pulvérisée avec la surface du support ne doit pas être trop élevée, sans quoi la couche formée après polymérisation ne peut être décollée du support ou encore risque de s'altérer lors du décollement. Ainsi, selon la nature de la matière pulvérisée et aussi celle du support, la surface de ce dernier peut être traitée au préalable à l'aide d'agents de séparation lorsque l'adhérence est trop forte. Comme agent de séparation, on peut utiliser des stéarates, des silicones, des hydrocarbures fluorés, de la paraffine, des cires, un produit d'addition d'oxyde d'éthylène tel que décrit par exemple dans la publication de brevet français FR-A 2 383 000. Ces mêmes produits ou d'autres produits convenables peuvent être utilisés également lorsque le support de coulée est en matière plastique, en métal, etc...

Le traitement de la surface du support peut se faire par mouillage de cette surface à l'aide d'une composition liquide comprenant l'agent de séparation, suivie d'une évaporation de la phase liquide. Différents procédés peuvent être utilisés pour appliquer la composition traitante sur la surface du support. On peut par exemple procéder par ruisellement, par pulvérisation, etc...

Sous un autre aspect avantageux de l'invention, lorsque le mélange réactionnel est susceptible de polymériser sous l'action de la chaleur on améliore encore le nappage de la couche en formation en effectuant la pulvérisation alors que le support à revêtir est chaud. Ainsi lorsqu'il s'agit de former une couche de polyuréthane thermodurcissable comme décrit par la suite, le meilleur nappage est obtenu lorsque la température du support est comprise entre 25 °C et 60 °C environ.

Le mélange réactionnel utilisé pour la pulvérisation selon l'invention est un mélange à deux composants susceptibles de former une couche de polyuréthane, notamment une couche de polyuréthane autocicatrisable ayant des propriétés de surface telles que, résistance à la rayure à l'abrasion.

Des exemples de monomères qui conviennent pour la préparation de ces polyuréthanes sont d'une part les isocyanates difonctionnels aliphatiques comme le 1,6-hexanediisocyanate, le 2,2,4-triméthyl-1,6-hexanediisocyanate, le 2,2,4-triméthyl-1,6-hexanediisocyanate, le 1,3-bis (isocyanatométhyl)benzène, le bis (4-isocyanatocyclohexyl)méthane, le bis (3-méthyl-4-isocyanatocyclohexyl)méthane, le 2,2-bis (4-isocyanatocyclohexyl)propane et le 3-isocyanatométhyl-3,5,5-triméthylcyclohexylisocyanate, ainsi que des biurets, isocyanurates et prépolymères de ces composés ayant une fonctionnalité de 3 ou davantage et d'autre part les polyols polyfonctionnels, comme les polyols ramifiés tels que les polyesterpolyols et polyétherpolyols obtenus par réaction d'alcools polyfonctionnels, notamment le 1,2,3-propanetriol (glycérol), le 2,2-bis (hydroxyméthyl)-1-propanol (triméthyloléthane), le 2,2-bis (hydroxyméthyl)-1-butanediol (triméthylolpropane), le 1,2,4-butanediol, le 1,2,6-hexanetriol, le 2,2-bis (hydroxyméthyl)-1,3-propanediol (pentaérythritol) et le 1,2,3,4,5,6-hexanehexol (sorbitol), avec des diacides aliphatiques comme l'acide malonique, l'acide succinique, l'acide glutarique, l'acide adipique, l'acide subérique et l'acide sébacique ou avec des éthers cycliques, comme l'oxyde d'éthylène, l'oxyde de 1,2-propylène et le tétrahydrofurane, ou encore des polycaprolactonepolyols. En tant que composant polyol, on peut encore utiliser un mélange d'au moins un diol long tel un polyesterdiol ou un polyétherdiol de masse moléculaire comprise entre 500 et 4000, et d'au moins un diol court, et le cas échéant d'au moins un polyol de fonctionnalité égale ou supérieure à trois.

Lorsque l'on désire obtenir une couche de revêtement ayant des propriétés améliorées de résistance à la buée, on peut encore choisir en tant que composant polyol, un polyol plurifonctionnel présentant des chaines éthoxy-propoxy, notamment un polyol difonctionnel comprenant 5 à 17% en poids de radicaux OH, de poids moléculaire moyen compris entre 200 et 600 environ et comprenant environ 80% en poids de radicaux éthoxy dans la chaîne éthoxy-propoxy. Ce polyol difonctionnel entre dans le mélange polyol-isocyanate à raison de 25 à 70% en poids environ dudit mélange. Le polyol plurifonctionnel peut aussi être un polyol de fonctionnalité supérieure à 2 comprenant 0,4 à 14% en poids de radicaux OH, de poids moléculaire moyen compris entre 500 et 15000 environ et comprenant 50 à 90% en poids environ de radicaux éthoxy dans les chaînes éthoxy-propoxy. Ce polyol entre dans le mélange polyol-isocyanate à raison de 30 à 90% en poids environ dudit mélange. Le polyol trifonctionnel est de préférence un polyétherpolyol à base de triméthylolpropane ou de glycérol et d'oxyde de propylène, ou un lactonepolyesterpolyol à base de triméthylolpropane ou de glycérol et d'caprolactone. Le polyol polyfonctionnel peut encore être un polyol tétrafonctionnel comprenant 0,7 à 14% en poids de radicaux OH, de poids moléculaire moyen compris entre 500 et 10000 environ et comprenant 10 à 80% en poids environ de radicaux éthoxy dans les chaînes éthoxy-propoxy.

La pulvérisation centrifuge à grande vitesse selon l'invention permet d'obtenir un mélange réactionnel homogène à partir de composants de viscosités très différentes.

Dans une variante, la pulvérisation centrifuge est une pulvérisation électrostatique connue en soi, la pulvérisation centrifuge s'effectuant dans un champ électrique.

Lorsque selon l'invention on fabrique une feuille à deux couches, l'une par pulvérisation centrifuge afin de former la couche PI, l'autre par coulée réactive afin de former la couche AE, cette seconde couche (qui peut le cas échéant être fabriquée avant la première couche PI) est formée par coulée réactive d'un mélange réactionnel d'un composant isocyanate et d'un composant à hydrogènes actifs notamment un composant polyol, le composant isocyanate comprenant au moins un diisocyanate aliphatique, cycloaliphatique ou un prépolymère de diisocyanate, ce composant ayant une viscosité inférieure à environ 5000 centipoises, à +40°C, le composant polyol comprenant au moins un polyol long difonctionnel de masse moléculaire comprise entre 500 et 4000 et au moins un diol court en tant qu'agent d'allongement de chaîne. Par coulée réactive on entend la coulée sous forme d'une couche ou d'un film d'un mélange liquide des composants à l'état de monomères ou de prépolymères, suivie d'une polymérisation de ce mélange par la chaleur. Cette coulée réactive qui fournit à la couche ses bonnes propriétés mécaniques et optiques sera décrite plus complètement dans la suite de la description. Les proportions des composants du polyuréthane sont choisies pour obtenir de préférence un système stoechiométriquement équilibré, c'est-à-dire que le rapport des groupements équivalents NCO apportés par le composant diisocyanate aux groupements équivalents OH apportés par le composant polyol, à savoir le ou les polyols longs et le ou les diols courts est de l'ordre de 1. Lorsque le rapport NCO/OH est inférieur à 1, plus il décroît et plus les propriétés mécaniques recherchées pour l'application deviennent rapidement peu satisfaisantes. Lorsque le rapport NCO/OH est supérieur à 1, plus il croît et plus certaines propriétés mécaniques de la couche obtenue par coulée réactive peuvent être renforcées, par exemple la couche devient plus rigide, mais étant donné le coût plus élevé du composant isocyanate par rapport à celui du composant polyol, le choix de ces rapports NCO/OH sensiblement égal à 1 est un bon compromis entre les propriétés obtenues et le coût.

Les proportions entre le polyol long et le diol court peuvent varier en fonction des propriétés désirées et aussi du rapport des groupements équivalents, le nombre des groupements équivalents OH dus au diol court représentant cependant généralement de 20 à 70% des groupements équivalents totaux du mélange formant le composant polyol dans le cas où le rapport des groupements équivalents NCO sur les groupements OH est de l'ordre de 1. Lorsqu'on augmente la proportion du diol court on durcit la couche et on augmente généralement son module. Les diisocyanates convenables utilisés dans le cadre de l'invention sont choisis parmi les isocyanates difonctionnels aliphatiques suivants: hexaméthylènediisocyanate (HMDI), 2,2,4-triméthyl, 6-hexanediisocyate (TMDI), bis 4-isocyanatocyclohexylméthane (Hylène W), bis 3-méthyl-4-isocyanatocyclohexylméthane, 2,2 bis (4-isocyanatocyclohexyl) propane, 3-isocyanatométhyl-3,5,5 triméthylcyclohexylisocyanate (IPDI), m-xylylènediisocyanate (XDI), m- et p-tétraméthylxylylènediisocyanate (m- et p- TMXDI), trans-cyclohexane-1,4 diisocyanate (CHDI), 1,3-(diisocyanatométhyl) cyclohexane (XDI hydrogéné). On utilise de préférence de l'IPDI notamment pour des raisons de prix de revient.

On utilise avantageusement un composant isocyanate contenant des fonctions urées. Ces fonctions urées améliorent certaines propriétés mécaniques de la couche. Le taux d'urée peut représenter jusqu'à environ 10% du poids total du composant isocyanate à fonctions urées. De préférence le taux d'urée est compris entre 5 et 7% du poids total dudit composant. Pour la raison invoquée précédemment on utilise de préférence du 3-isocyanatométhyl-3,5,5 triméthylcyclohexyldiisocyanate comportant des fonctions urées (IPDI et dérivés).

Les polyols longs convenables sont choisis parmi des polyétherdiols ou des polyesterdiols de masse moléculaire 500-4000; les polyesterdiols étant les produits d'estérification d'un diacide tel que l'acide adipique, succinique, palmitique, azelaïque, sébacique, ophtalique et d'un diol tel un éthylèneglycol, propanediol-1,3, butanediol-1,4, hexanediol-1,6, les polyétherdiols qui ont pour formule générale $H[O(CH_2)n]_mOH$
avec n = 2 à 6; m tel que la masse moléculaire soit située dans l'intervalle 500-4000 ou les polyétherdiols de formule générale

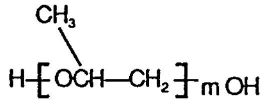

avec m tel que la masse moléculaire soit située également dans l'intervalle 500-4000. On peut encore utiliser des polycaprolactone-diols.

On utilise de préférence un polytétraméthylène glycol (n = 4) de masse moléculaire 1000.

Les agents d'allongement de chaines convenables sont des diols courts de masse moléculaire inférieure à environ 300 et de préférence inférieure à 150, tels que les: éthylèneglycol, propanediol-1,2, propanediol-1,3, butanediol-1,2, -1,3, -1,4, diméthyl-2,2, propanediol-1,3 (néopentylglycol), pentanediol-1,5, hexanediol-1,6, octanediol-1,8, décanediol-1,10, dodécanediol-1,12, cyclohexanediméthanol, bisphénol A, méthyl-2 pentanediol-2,4, méthyl-3 pentanediol-2,4, éthyl-2 hexanediol-1,3,triméthyl-2,2,4-pentanediol-1,3, diéthylèneglycol, triéthylèneglycol, tétraéthylèneglycol, butyne-2-diol-1,4,butènediol-1,4 et décynediol substitués et/ou éthérifiés, hydroquinone-bis-hydroxyéthyléther, bisphénol A éthérifiés par deux ou quatre groupes d'oxyde de propylène, acide diméthylolproponique. En général plus le diol est court plus la couche est dure.

On utilise de préférence le butanediol-1,4 qui est un bon compromis pour l'obtention d'une couche ni trop dure, ni trop souple, que l'on recherche pour ce type d'application tant qu'absorbeur d'énergie.

La coulée réactive implique une réaction rapide pour que la couche soit formée en des temps compatibles avec une fabrication industrielle. Ceci nécessite une température élevée, de l'ordre de 100 à 140°C environ, température à laquelle des réactions secondaires de ramification se produisent créant par exemple des groupements allophanates et/ou biurets entre les chaines d'uréthane, telles que:

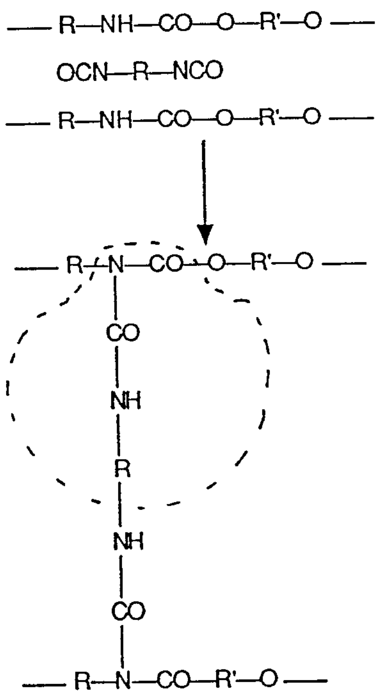

ou

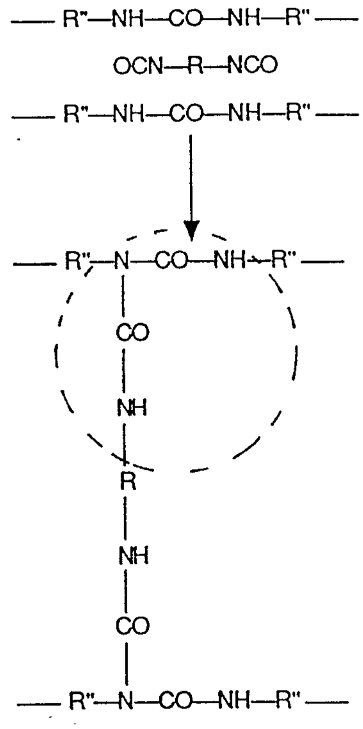

Dans ces conditions opératoires, mêmes avec des composants difonctionnels, lorsque le rapport NCO/OH est sensiblement égal à 1 le produit obtenu n'est pas complètement thermoplastique; en effet, il est infusible et insoluble dans la plupart des solvants des polyuréthanes tel que le tétrahydrofurane, le diméthylformamide. On en tire comme avantage des propriétés mécaniques améliorées à formulation égale par rapport à un système équivalent polymérisé à basse température où seule une polycondensation linéaire se produit.

Lorsque le rapport NCO/OH est inférieur à 1 et de l'ordre de 0,8 à 0,9, une réticulation du type décrit ci-dessus ne se produit que de façon insignifiante.

Dans une réalisation de la couche de polyuréthane ayant des propriétés d'absorbeur d'énergie, le composant polyol peut contenir une faible proportion d'au moins un polyol de fonctionnalité égale ou supérieure à trois et notamment des triols aliphatiques monomères tels le glycérol, le triméthylolpropane, des triols à chaines polyéther, des triols de polycaprolactone, la masse moléculaire de ces triols étant généralement comprise entre 90 et 1000. L'ajout d'un triol provoque des liaisons de pontage supplémentaires entre les chaines du polyuréthane et peut ainsi encore améliorer la cohésion de la couche.

Les proportions entre le polyol long, le diol court et éventuellement le triol peuvent varier selon les propriétés désirées. On choisit généralement des proportions telles que pour un équivalent hydroxyle le polyol long représente environ de 0,35 à 0,45 équivalent, le diol court d'environ 0,2 à 0,7 équivalent et le triol environ 0 à 0,3 équivalent. Dans ces conditions, la couche présente

les caractéristiques mécaniques suivantes, mesurées suivant les normes AFNOR/NFT 46 002, 51 034, 54 108.

- une contrainte au seuil d'écoulement $\sigma_Y$ à −20 °C inférieure ou égale à 3 daN/mm²
- une contrainte à la rupture $\sigma_R$ à +40 °C supérieure ou égale à 2 daN/mm²
- un allongement à la rupture $\varepsilon_R$ à +20 °C compris entre 250 et 400%
- une résistance à la déchirure amorcée Ra à +20 °C supérieure ou égale à 8,8 daN/mm d'épaisseur.

On peut encore réaliser la couche en remplaçant une partie du composant polyol par un produit à hydrogènes actifs différents, tel une amine.

Sous un des aspects de l'invention, on fabrique une feuille à deux couches, à savoir, une couche de protection interne d'une épaisseur supérieure à environ 200 m et une couche fine, par exemple de l'ordre de 50 µm d'épaisseur, ayant essentiellement des propriétés d'adhésion. Dans ce cas, la couche de protection interne est de préférence obtenue par coulée réactive du mélange des composants alors que la couche adhésive est obtenue par pulvérisation centrifuge du mélange réactionnel décrit précédemment pour former la couche AE.

Sous un autre aspect de l'invention, on fabrique une feuille à deux couches, l'une de protection interne, l'autre ayant des propriétés d'absorbeur d'énergie, par pulvérisation centrifuge des mélanges réactionnels adaptés pour chacune des couches. Le cas échéant, selon les épaisseurs désirées, chacune de ces deux couches peut être constituée d'une superposition de plusieurs couches que l'on peut appeler couches élémentaires correspondant chacune à une pulvérisation centrifuge.

Le support de formation de la couche ou feuille sur lequel est effectué la ou les pulvérisations selon l'invention peut être un support rigide en verre ou métallique. Ce peut être aussi un support souple tendu horizontalement comme décrit par exemple dans la publication de brevet européen EP-A 0 038 760.

Sous un autre aspect de l'invention le support plan horizontal sur lequel est effectué la pulvérisation centrifuge à grande vitesse est un support souple tendu pouvant être utilisé comme un des éléments entrant dans la composition d'une feuille à plusieurs couches, utilisable telle quelle ou en étant associée à d'autres éléments.

Ainsi selon l'invention, on peut fabriquer une feuille composite comprenant une feuille de polyester par exemple, notamment du polytéréphtalate d'éthylèneglycol revêtue d'une couche de polyuréthane autocicatrisable ayant des propriétés de surface telles que résistance à la rayure et à l'abrasion, cette couche étant obtenue par pulvérisation centrifuge comme indiqué précédemment.

Pour la mise en œuvre de cette fabrication, on pourra avantageusement utiliser le procédé et les moyens décrit dans la publication de brevet européen EP-A 0 038 760 déjà cité.

Dans une variante, le support souple tendu est revêtu sur ces deux faces par une couche obtenue par pulvérisation centrifuge d'un même mélange réactionnel ou de mélanges différents. A cet effet, on forme une première couche sur le support et après polymérisation on retourne le support revêtu et on forme l'autre couche sur la face non couverte par la première couche.

L'invention concerne également un dispositif constituant une ligne pour la fabrication d'au moins une couche de haute qualité optique, selon le préambule de la revendication 14. Un tel dispositif est décrit dans EP-A 0 038 760.

La ligne de fabrication se répartit en plusieurs zones, une zone de traitement du support, une zone de pulvérisation et une zone de polymérisation de la matière apportée par pulvérisation, et le cas échéant des zones pour la formation d'une seconde couche notamment par coulée réactive d'un mélange de composants.

La ligne de fabrication selon l'invention est caractérisée par un support plan mobile notamment en verre par rapport a des moyens de pulvérisation pour l'apport du mélange réactionnel disposés au-dessus du support plan, ces moyens étant constitués d'au moins un pulvérisateur à tête tournante à grande vitesse, comprenant un bol et un plateau tournant à une vitesse comprise entre 1000 et 80000 tours/min et une partie fixe percée de conduits d'alimentation pour les composants débouchant dans la partie centrale du plateau des moyens pour la polymérisation de la couche formée. Le dispositif comprend en outre lorsqu'il est utilisé pour la fabrication d'une feuille à deux couches, les moyens nécessaires à la fabrication de la seconde couche qui peuvent être une tête de coulée à large fente mince comme décrit dans la publication de brevet français FR-A 2 347 170, et des moyens pour la polymérisation de cette deuxième couche, ces moyens supplémentaires étant disposés en aval ou en amont des moyens de formation de la couche par pulvérisation centrifuge selon qu'on forme en premier lieu la couche par pulvérisation centrifuge, ou en second lieu.

Lorsque le support entre dans la composition d'une feuille composite comme indiqué précédemment, la ligne de fabrication comprendra avantageusement les moyens décrits dans la publication de brevet européen EP-A 0 038 760 déjà cité.

D'autres caractéristiques et avantages ressortiront de la description d'exemple de dispositif, selon l'invention.

La fig. 1 représente schématiquement une ligne pour la fabrication d'une couche de haute qualité optique par pulvérisation selon l'invention.

La fig. 2 représente en section, une tête de pulvérisation. La fig. 3 représente une ligne pour la fabrication d'une feuille à deux couches utilisée dans les vitrages feuilletés.

La ligne de fabrication représentée sur la figure 1 est constituée d'une longue enceinte 1 découpée en compartiments, traversée par un support plan 2 pour la formation de la couche, ce support étant par exemple une bande continue constituée d'une succession de plaques de verre accolées les unes aux autres, et étant entraîné à une vitesse uniforme par un transporteur à rouleaux 3. Le premier compartiment 4 est équipé de moyens par exemple un pistolet pulvérisateur 5 pour le traitement préalable du ruban de verre à l'aide d'un agent de séparation. Ce compartiment est équipé également de moyens de chauffage 6 tel des résistances électriques afin de porter le ruban de verre 2 à la température convenable.

Le compartiment suivant 7 correspond à la zone de formation de la couche par pulvérisation centrifuge. Ce compartiment est équipé de moyens de pulvérisation centrifuge 8 dont la tête 9 comprend un bol tournant à grande vitesse comme décrit par la suite. Le compartiment 10 disposé en aval correspond à la zone de polymérisation et il comprend en conséquence des moyens assurant la polymérisation de la couche obtenue par pulvérisation, ces moyens étant le cas échéant, des moyens de chauffage 11 tels des résistances électriques. En aval de la polymérisation des moyens 12 sont prévus pour détacher la couche 101 du support de formation et pour l'enrouler autour de la bobine 13.

La ligne comprend en divers emplacements, sur toute sa longueur, des moyens 14 pour éliminer l'électricité statique dans l'environnement du ruban de verre avant recouvrement. Ces moyens peuvent être des barres électrostatiques connues en soi.

La ligne peut aussi comprendre des moyens de nettoyage (non représentés) pour éliminer les poussières et autres particules déposées sur le ruban de verre ou sur le film.

La tête 9 du dispositif de pulvérisation centrifuge à grande vitesse représentée sur la figure 2 comporte une partie mobile 15 constituée du bol tournant 16 proprement dit, solidaire d'un mandrin 17 porteur d'un plateau 18 et d'une partie fixe 19 percée de deux conduits d'alimentation 20, 21 pour les composants, ces conduits débouchant dans la partie centrale du plateau.

Afin d'augmenter la longueur du parcours pour effectuer le mélange des deux composants introduits par les conduits 20, 21 et aussi pour améliorer ce mélange avant la pulvérisation, le bol présente une surface interne 22 dont la génératrice est ondulée, d'une part, et le plateau 18 porte des aspérités ou nervures 23 dirigées vers le haut, formant chicanes, d'autre part.

La figure 3 représente une ligne pour la fabrication d'une feuille à deux couches, la première couche étant la couche décrite précédemment, la seconde couche étant une couche ayant des propriétés d'absorbeur d'énergie de sorte que ladite feuille peut être utilisée directement dans la fabrication des vitrages feuilletés décrits précédemment. Cette ligne est constituée d'une longue enceinte 26 découpée en compartiments, traversée par un support plan 27 pour la formation de la feuille 28, ce support étant comme dans le dispositif décrit précédemment une succession de plaques de verre accolées les unes aux autres, et étant entraîné à vitesse uniforme par un transporteur à rouleaux 29. Le début de la ligne est identique à celle décrite en relation avec la figure 1, c'est à dire qu'elle comporte notamment un premier compartiment 30 pour le traitement préalable du ruban de verre à l'aide d'un agent de séparation, un second compartiment 31 correspondant à la zone de formation de la première couche 32 par pulvérisation centrifuge, suivi d'un compartiment 33 pour la polymérisation de la couche formée. La ligne se prolonge en outre par des compartiments correspondant à la formation de la deuxième couche 34 de matière plastique par coulée réactive d'un mélange de composants. Le premier 35 de ces compartiments est équipé d'une tête de coulée 36 à large fente mince 37 qui sert à déverser de façon régulière et contrôlée la matière liquide 38 propre à former la seconde couche 34. Une tête de coulée convenable est par exemple celle décrite dans la publication de brevet français FR-A 2 347 170. Le compartiment en aval 39 est équipé de moyens 40 pour la polymérisation de cette seconde couche. En bout de la ligne de fabrication, sont disposés des moyens 41 pour extraire la feuille à deux couches du ruban de verre et pour l'enrouler autour de la bobine 42.

Des barres électrostatiques 43 et des moyens de nettoyage (non représentés) pour éliminer les poussières et autres particules sont également prévus en plusieurs emplacements de la ligne.

Le fonctionnement du dispositif est décrit par la suite en relation avec des exemples.

Exemple 1

Dans cet exemple, on forme une couche de haute qualité optique en mettant en œuvre le dispositif décrit en relation avec la figure 1.

Le support en verre mobile 2 défilant de manière continue est revêtu lors de son passage dans le compartiment 4 d'un agent de séparation qui peut être par exemple celui décrit dans la publication de brevet français FR-A 2 383 000, à savoir un produit d'addition modifié d'éthylène oxyde. Le support traité reçoit dans le compartiment suivant 7 une pulvérisation centrifuge d'un mélange de composants avec les proportions suivantes:

- 1000 g d'un polyéther d'un poids moléculaire d'environ 450 obtenu par condensation d'oxyde 1,2-propylène avec du 2,2-bis (hydroxyméthyl)-1-butanol et ayant une teneur en radicaux hydroxyles libres d'environ 10,5 à 12%, contenant 1% en poids d'un stabilisant, 0,05% en poids d'un catalyseur à savoir du dilaurate de dibutylétain et 0,1% en poids d'un agent nappant,
- 1020 g d'un biuret de 1,6-hexanediisocyanate ayant une teneur en radicaux isocyanates libres d'environ 23,3%.

Le composant polyol présente une viscosité

d'environ 620 centipoises à 25°C alors que le composant isocyanate présente une viscosité d'environ 2300 centipoises.

La pulvérisation centrifuge est effectuée alors que le mélange réactionnel est à environ 25°C, à l'aide du bol tournant à une vitesse d'environ 20000 tours/min, le diamètre du bol étant d'environ 90 mm. On forme ainsi une couche de polyuréthane d'environ 100 µm, qui est acheminée dans le tunnel de polymérisation où elle est polymérisée en étant portée à une température d'environ 100°C durant environ 20 mn.

La couche est extraite du ruban de verre par des moyens convenables en bout de ligne. Elle présente une excellente qualité optique.

Exemple 2

Dans cet exemple on forme une feuille à deux couches de haute qualité optique par mise en œuvre dispositif décrit en relation avec la figure 3.

On opère de façon identique à l'exemple 1 pour la formation de la première couche de polyuréthane, sauf qu'on réduit son épaisseur à environ 50 µm.

Après polymérisation de cette couche on coule à l'aide d'une tête de coulée comme celle décrite dans la publication de brevet français FR-A 2 347 170 un mélange de composants apte à former une couche de polyuréthane ayant des propriétés d'absorbeur d'énergie. A cet effet on prépare au préalable le composant polyol en mélangeant un polytétraméthylèneglycol de masse moléculaire 1000 (par exemple le produit commercialisé sous l'appellation Polymeg 1000 par la société Quaker Oats), avec du butanediol-1,4, les proportions des deux constituants étant telles que le polytétraméthylèneglycol apporte 0,37 équivalent en groupes hydroxyles alors que le butanediol-1,4 en apporte 0,63. Au composant polyol on incorpore un stabilisant à raison de 0,5% en poids de la masse totale du composant polyol et du composant isocyanate, un agent nappant à raison de 0,05% en poids calculé de la même façon et un catalyseur à savoir du dilaurate de dibutylétain à raison de 0,02% en poids calculé de la même façon que précédemment.

Le composant isocyanate utilisé est du 3-isocyanatométhyl-3,5,5-triméthylcyclohexylisocyanate (IPDI) présentant des fonctions urées obtenues par hydrolyse partielle de l'IPDI et ayant une teneur en groupements NCO d'environ 31,5% en poids.

Les composants sont pris en quantités telles que le rapport NCO/OH est de 1.

Après dégazage sous vide des composants, le mélange porté à environ 40°C est coulé sur la couche de polyuréthane formé précédemment. On forme ainsi une couche d'environ 0,55 mm d'épaisseur qui est soumise dans le compartiment 33 à un cycle de polymérisation consistant à 25 minutes de chauffage à 120°C au moins.

La feuille à deux couches est retirée du support en verre et elle peut être manipulée aisément, stockée ou utilisée juste après pour la fabrication de vitrages feuilletés.

Pour fabriquer un vitrage on assemble la feuille à deux couches obtenue précédemment avec une feuille en verre recuit de 2,6 mm d'épaisseur. Le verre peut éventuellement être durci ou trempé. L'assemblage peut s'effectuer en deux étapes, une première étape consistant en un assemblage préliminaire obtenu par passage des éléments constitutifs du vitrage entre deux rouleaux d'une calandreuse; à cette fin, on peut utiliser par exemple, le dispositif décrit dans la publication du brevet européen EP-A 0 015 209, la couche AE étant appliquée contre la face interne du verre, et une seconde étape consistant en une mise du produit feuilleté obtenu dans un autoclave où pendant une heure environ il subit une pression d'environ 10 bars à une température d'environ 135°C. Ce cycle d'autoclave peut être éventuellement remplacé par un cycle d'étuvage sans pression.

Le vitrage obtenu présente une excellente qualité optique et une transparence parfaite et un ensemble de propriétés mécaniques qui le rendent apte à une utilisation en tant que pare-brise de véhicule.

L'adhérence obtenue entre la feuille de verre et la couche ayant des propriétés d'absorbeur d'énergie est mesurée sur le vitrage fabriqué par un test de pelage décrit ci-dessous.

On découpe une bande de 5 cm de large de la feuille de recouvrement à deux couches. On décolle l'extrémité de la bande sur laquelle on effectue une traction perpendiculaire à la surface du vitrage, avec une vitesse de traction de 5 cm par minute. L'opération est réalisée à 20°C. On note la force de traction moyenne nécessaire au décollement de la bande. En opérant ainsi, on obtient une force de traction de 10 daN/5cm.

Des essais de résistance au choc à différentes températures sont réalisés sur le vitrage fabriqué selon l'exemple.

Le premier essai de résistance au choc est effectué avec une bille d'acier d'un poids de 2,260 kg (test de la grosse bille) que l'on fait tomber sur la partie centrale d'un échantillon de vitrage feuilleté de 30,5 cm de côté, maintenu sur un cadre rigide. On détermine la hauteur approximative pour laquelle 90% des échantillons testés à la température choisie résistent à la chute de bille sans être traversés.

Pour le vitrage feuilleté selon l'exemple la valeur obtenue est de 9 mètres.

Un autre essai de résistance au choc est effectué avec une bille d'acier de 0,227 kg et de 38 mm de diamètre. Un essai est réalisé à une température de −20°C, un autre est réalisé à une température de +40°C. Les valeurs obtenues sont respectivement de 11 et de 13 mètres.

Compte-tenu de la norme européenne R 43 en vigueur, les résultats recherchés sont d'au moins 4 mètres à la grosse bille, d'au moins 8,5 mètres à la petite bille à −20°C et d'au moins 9 mètres à la petite bille à +40°C.

Par ailleurs, la couche PI de faible épaisseur

montre des propriétés de surface suffisantes pour une utilisation dans un vitrage feuilleté et notamment une résistance à la rayure et à l'abrasion mesurées comme décrit ci-après:

On mesure la résistance à la rayure par le test à la rayure connu sous l'appellation de «Mar résistant test» et qui est pratiqué avec l'appareil Erichsen, type 413. On mesure la charge à porter sur une tête diamantée pour introduire une rayure persistante sur la couche de matière plastique assemblée au support en verre. La charge doit être supérieure ou égale à 20 grammes pour que la couche de matière plastique ait la propriété d'être autocicatrisable.

On mesure la résistance à l'abrasion selon la norme européenne R 43. A cet effet, on fait subir à un échantillon assemblé du vitrage une abrasion à l'aide d'une meule abrasive. Après 100 tours d'abrasion, on mesure au spectrophotomètre l'écart de flou entre la partie abrasée et la partie non abrasée. L'écart de flou (Δ flou) doit être inférieur à 4% pour que la couche ait la qualité anti-abrasive. L'écart de flou est ici de 3,5%.

Le vitrage selon l'exemple présente toutes les caractéristiques le rendant apte à l'utilisation en tant que pare-brise de véhicule.

Exemple 3

On forme une feuille à deux couches, à savoir une couche de 0,4 mm d'épaisseur présentant des propriétés d'autocicatrisation et d'antilacération et une couche de 50 µm d'épaisseur présentant des propriétés d'adhésion.

A cette fin, on opère de la façon inverse à celle décrite dans l'exemple 2. On coule à l'aide de la tête de coulée, le mélange réactionnel décrit dans l'exemple 1, et après polymérisation de cette couche, on pulvérise sur celle-ci le mélange réactionnel avec lequel on a formé la couche AE dans l'exemple 2. Après polymérisation, on obtient une couche adhésive.

La feuille à deux couches est assemblée à un vitrage feuilleté constitué de deux feuilles de verre et d'une couche intercalaire en polyvinylbutyral, la couche adhésive étant placée au contact de la feuille de verre interne, de sorte que l'ensemble peut être utilisé comme pare-brise de sécurité présentant entre autre des propriétés d'autocicatrisation et d'antilacération.

Exemple 4

On fabrique une feuille ayant des propriétés anti-éclats, utilisable dans des vitrages automobile ou bâtiment.

A cet effet, on forme sur un support plan en verre, une première couche de 100 µm d'épaisseur par pulvérisation centrifuge d'un mélange réactionnel comme décrit dans l'exemple 1.

Après polymérisation, on forme une seconde couche de 100 µm d'épaisseur sur la première couche toujours disposée sur le support plan, par pulvérisation centrifuge du mélange réactionnel apte à former une couche AE comme décrit dans l'exemple 2.

Après polymérisation de cette seconde couche on retire la feuille composite du support de formation et on l'assemble par exemple à une feuille de verre trempée, le vitrage formé étant utilisé comme vitrage latéral pour véhicule à moteur.

La feuille à deux couches peut ainsi être assemblée avec une feuille de verre trempée ou non et l'ensemble utilisé comme vitrage bâtiment. En cas de bris de vitrage, la feuille de matière plastique maintient les éclats de verre.

Exemple 5

On opère de la même façon que dans l'exemple 4, mais pour former deux couches, chacune d'une épaisseur de 200 µm. La feuille obtenue peut être utilisée comme feuille antilacérante et autocicatrisable en étant associé à un vitrage feuilleté constitué de deux feuilles de verre et d'un intercalaire en polyvinylbutyral par exemple.

Exemple 6

Sur un ruban de polytéréphtalale d'éthylèneglycol de 50 m d'épaisseur maintenu tendu comme indiqué dans le dispositif décrit dans la publication de brevet européen EP-A 0 038 760, on forme par coulée réactive du mélange réactionnel décrit dans l'exemple 2, une couche AE de 0,4 mm d'épaisseur. Après polymérisation, on retourne le film composite et sur celui-ci maintenu tendu horizontalement de la même façon, on forme par pulvérisation centrifuge du mélange réactionnel décrit dans l'exemple 1, une couche de 50 µm d'épaisseur.

Après polymérisation, la feuille composite obtenue peut être assemblée à un support monolithique en verre pour constituer un vitrage de sécurité utilisable notamment comme pare-brise d'un véhicule à moteur.

Exemple 7

Sur une bande métallique horizontale préalablement revêtue d'un agent de séparation, on coule le mélange réactionnel décrit dans l'exemple 2, pour former une couche AE de 0,6 mm d'épaisseur. Après polymérisation, on détache la couche du support, on la retourne et sur la face initialement au contact du support, on forme une seconde couche de 50 µm d'épaisseur par pulvérisation centrifuge du mélange réactionnel décrit dans l'exemple 1.

Après séparation du support métallique de formation, la feuille obtenue peut être utilisée en étant associée à un support monolithique en verre pour former un vitrage de sécurité tel un pare-brise de véhicule à moteur.

**Revendications**

1. Procédé de fabrication en continu d'une feuille de matière plastique de haute qualité optique pouvant être utilisée dans les vitrages feuilletés, comprenant au moins une couche de faible épaisseur, notamment une couche présentant des propriétés de surface telles que résistance à la rayure et à l'abrasion, par apport d'un mélange

de composants réactionnels, sur un support plan, horizontal, animé d'un mouvement d'avance uniforme relatif par rapport à l'apport, suivi d'une polymérisation de la couche, caractérisé en ce que l'apport du mélange réactionnel est effectué par pulvérisation centrifuge à grande vitesse à l'aide d'une tête de pulvérisation comprenant un bol tournant à une vitesse comprise entre 1000 et 80000 tours/min, le mélange réactionnel étant réalisé directement dans la tête de pulvérisation.

2. Procédé selon la revendication 1, caractérisé en ce qu'on améliore le mélange dans la tête de pulvérisation en lui faisant subir un parcours en chicanes et ondulations au cours de la rotation du bol.

3. Procédé selon une des revendications 1 ou 2, caractérisé en ce que sur la première couche obtenue par pulvérisation centrifuge, on forme une seconde couche.

4. Procédé selon la revendication 3, caractérisé en ce que la seconde couche est formée par coulée réactive d'un mélange de composants réactionnels apte à former une couche ayant des propriétés d'absorbeur d'énergie.

5. Procédé selon une des revendications 1 ou 2, caractérisé en ce que la pulvérisation centrifuge à grande vitesse du mélange de composants réactionnels est effectuée sur une première couche de matière plastique déjà formée sur le support plan.

6. Procédé selon la revendication 5, caractérisé en ce que la couche déjà formée est obtenue par coulée réactive d'un mélange de composants réactionnels apte à former une couche ayant des propriétés d'absorbeur d'énergie.

7. Procédé selon une des revendications 4 ou 6, caractérisé en ce que la couche ayant des propriétés d'absorbeur d'énergie est obtenue par coulée réactive d'un mélange réactionnel d'un composant isocyanate et d'un composant à hydrogènes actifs notamment un composant polyol.

8. Procédé selon une des revendications 1 à 7, caractérisé en ce qu'on pulvérise un mélange réactionnel apte à former une couche de polyuréthane notamment de polyuréthane thermodurcissable.

9. Procédé selon une des revendications 1 à 7, caractérisé en ce qu'on pulvérise un mélange réactionnel apte à former une couche de polyuréthane ayant des propriétés d'absorbeur d'énergie.

10. Procédé selon une des revendications 1 à 9, caractérisé en ce que le mélange réactionnel pulvérisé contient un agent de nappage.

11. Procédé selon une des revendications 1 à 10, caractérisé en ce que la pulvérisation centrifuge est électrostatique.

12. Procédé selon une des revendications 1 à 11, caractérisé en ce que le support plan sur lequel est effectué la pulvérisation centrifuge est un support souple, tendu, entrant dans la composition de la feuille de matière plastique.

13. Procédé selon la revendication 12, caractérisé en ce que le support souple, tendu est du polytéréphtalate d'éthylèneglycol.

14. Dispositif pour la fabrication en continu d'une feuille de matière plastique de haute qualité optique pouvant être utilisée dans les vitrages feuilletés, comprenant au moins une couche de faible épaisseur, notamment une couche présentant des propriétés de surface telles que résistance à la rayure et à l'abrasion, cette couche étant obtenue par apport d'un mélange de composants réactionnels sur un support plan, caractérisé en ce qu'il comprend un support plan (2, 27) mobile par rappport à des moyens de pulvérisation pour l'apport du mélange réactionnel, disposés audessus du support plan, ces moyens étant constitués d'au moins un pulvérisateur à tête tournante (9), comprenant un bol (16) et un plateau (18) tournant à une vitesse comprise entre 1000 et 80000 tours/min, et une partie fixe percée de conduits d'alimentation pour les composants débouchant dans la partie centrale du plateau, des moyens (11) pour la polymérisation de la couche formée.

15. Dispositif selon la revendication 14, caractérisé en ce que le plateau porte des chicanes (23) et/ou le bol présente une surface interne (22) dont la génératrice est ondulée.

16. Dispositif selon une des revendications 14 ou 15, caractérisé en ce que l'ensemble est placé dans une longue enceinte (1) divisée en compartiments (4, 7, 10).

17. Dispositif selon une des revendications 14 à 16, caractérisé en ce qu'il comprend en outre des moyens (33, 35, 36, 39) pour la fabrication d'une seconde couche (34).

18. Dispositif selon la revendication 17, caractérisé en ce que les moyens pour la fabrication de la seconde couche comprennent une tête de coulée à large fente mince (36).

**Patentansprüche**

1. Verfahren zum kontinuierlichen Herstellen einer Folie aus Kunststoffmaterial hoher optischer Qualität, die in Verbundgläsern verwendet werden kann, die mindestens eine Schicht geringer Dicke umfasst, insbesondere eine Schicht, deren Oberfläche Eigenschaften wie Kratz- und Abriebsbeständigkeit aufweist, durch Zufuhr einer Mischung von Reaktionskomponenten auf eine horizontale Trägerebene, die mit Bezug auf die Zufuhr gleichmässig vorbewegt wird, gefolgt von einer Polymerisation der Schicht, dadurch gekennzeichnet, dass die Zufuhr der Reaktionsmischung durch Zentrifugalzerstäubung mit grosser Geschwindigkeit mittels eines Zerstäuberkopfes erfolgt, der einen Behälter umfasst, der sich mit einer Geschwindigkeit zwischen 1000 und 80000 U/min dreht, wobei die Reaktionsmischung direkt im Zerstäuberkopf gebildet wird.

2. Verfahren nach Anspruch 1, dadurch gekennzeichnet, dass man die Vermischung im Zerstäuberkopf verbessert, indem man sie während der Rotation des Behälters über eine Strecke von Hindernissen und Wellenlinien laufen lässt.

3. Verfahren nach einem der Ansprüche 1 oder 2, dadurch gekennzeichnet, dass auf der ersten durch Zentrifugalzerstäubung erhaltenen Schicht eine zweite Schicht gebildet wird.

4. Verfahren nach Anspruch 3, dadurch gekennzeichnet, dass die zweite Schicht durch Reaktionsguss einer Mischung von Reaktionskomponenten gebildet wird, die geeignet sind, eine Schicht mit energieabsorbierenden Eigenschaften zu bilden.

5. Verfahren nach einem der Ansprüche 1 oder 2, dadurch gekennzeichnet, dass die Zentrifugalzerstäubung einer Mischung von Reaktionskomponenten mit grosser Geschwindigkeit auf eine erste Schicht aus Kunststoffmaterial erfolgt, die bereits auf der Trägerebene gebildet ist.

6. Verfahren nach Anspruch 5, dadurch gekennzeichnet, dass die bereits gebildete Schicht durch Reaktionsguss einer Mischung von Reaktionskomponenten erhalten worden ist, die geeignet sind, eine Schicht mit energieabsorbierenden Eigenschaften zu bilden.

7. Verfahren nach einem der Ansprüche 4 oder 6, dadurch gekennzeichnet, dass die Schicht mit energieabsorbierenden Eigenschaften durch Reaktionsguss einer reagierenden Mischung aus einer Isocyanatkomponente und einer Komponente mit aktivem Wasserstoff, insbesondere einer Polyolkomponente, erhalten wird.

8. Verfahren nach einem der Ansprüche 1 bis 7, dadurch gekennzeichnet, dass man eine Reaktionsmischung zerstäubt, die geeignet ist, eine Polyurethanschicht, insbesondere eine wärmehärtbare Polyurethanschicht, zu bilden.

9. Verfahren nach einem der Ansprüche 1 bis 7, dadurch gekennzeichnet, dass man eine Reaktionsmischung zerstäubt, die geeignet ist, eine Polyurethanschicht zu bilden, die energieabsorbierende Eigenschaften aufweist.

10. Verfahren nach einem der Ansprüche 1 bis 9, dadurch gekennzeichnet, dass die zerstäubte Reaktionsmischung ein Netzmittel enthält.

11. Verfahren nach einem der Ansprüche 1 bis 10, dadurch gekennzeichnet, dass die Zentrifugalzerstäubung elektrostatisch erfolgt.

12. Verfahren nach einem der Ansprüche 1 bis 11, dadurch gekennzeichnet, dass die Trägerebene, auf die die Zentrifugalzerstäubung erfolgt, ein straffgespannter elastischer Träger ist, der in die Zusammensetzung der Folie aus Kunststoffmaterial eintritt.

13. Verfahren nach Anspruch 12, dadurch gekennzeichnet, dass der straffgespannte elastische Träger aus Polyethylenglykolterephthalat besteht.

14. Vorrichtung zum kontinuierlichen Herstellen einer Folie aus Kunststoffmaterial hoher optischer Qualität, die in Verbundglas benutzt werden kann, mindestens eine Schicht geringer Dikke umfasst, insbesondere eine Schicht, die Oberflächeneigenschaften wie Kratz- und Abriebsbeständigkeit aufweist, wobei diese Schicht durch Zufuhr einer Mischung von Reaktionskomponenten auf den ebenen Träger erhalten ist, dadurch gekennzeichnet, dass sie einen ebenen Träger (2, 27), der mit Bezug auf eine Zerstäubungseinrichtung zur Zufuhr der Reaktionsmischung beweglich ist, umfasst, wobei die genannte Einrichtung über der Trägerebene angeordnet ist und aus mindestens einem Zerstäuber mit Rotationskopf (9) besteht, der einen Behälter (Schale) (16) und eine Platte (18) umfasst, die sich mit einer Geschwindigkeit von 1000 bis 80000 U/min drehen, und der Kopf ein fixiertes Teil aufweist, das von Zufuhrleitungen für die Komponenten durchbohrt ist, die sich im zentralen Teil der Platte öffnen, und mit einer Einrichtung (11) zur Polymerisation der gebildeten Schicht.

15. Vorrichtung nach Anspruch 14, dadurch gekennzeichnet, dass die Platte Hindernisse (23) und/oder der Behälter (Schale) eine innere Oberfläche (22) aufweist, deren Mantellinie wellenförmig verläuft.

16. Vorrichtung nach einem der Ansprüche 14 oder 15, dadurch gekennzeichnet, dass sie in einem langen Gehäuse (1) angeordnet ist, das in Abteile (4, 7, 10) unterteilt ist.

17. Vorrichtung nach einem der Ansprüche 14 bis 16, dadurch gekennzeichnet, dass sie ausserdem eine Einrichtung (33, 35, 36, 39) für die Herstellung einer zweiten Schicht (34) umfasst.

18. Vorrichtung nach Anspruch 17, dadurch gekennzeichnet, dass die Einrichtung für die Herstellung der zweiten Schicht einen Giesskopf mit grossem, dünnem Spalt (36) umfasst.

**Claims**

1. A method for the continuous production of a sheet of plastics material of high optical quality capable of being used in laminated panes, comprising at least one layer of small thickness, notably a layer possessing surface properties such as resistance to scratching and abrasion, by application of a mixture of reaction components onto a horizontal, plane support, subject to a uniform movement of advance relative to the application, followed by a polymerisation of the layer, characterized in that the application of the reaction mixture is carried out by centrifugal atomization at high speed by means of an atomization head comprising a bowl rotating at a speed of from 1,000 to 80,000 revolutions per minute, the reaction mixture being produced directly in the atomization head.

2. A method according to claim 1, characterized in that the mixture in the atomization head is improved by causing it to follow a path comprising chicanes and undulations during the rotation of the bowl.

3. A method according to one of claims 1 or 2, characterized in that a second layer is formed on the first layer produced by centrifugal atomization.

4. A method according to claim 3, characterized in that the second layer is formed by reactive casting of a mixture of reaction components adapted for forming a layer possessing energy-absorption properties.

5. A method according to one of claims 1 or 2,

characterized in that the centrifugal atomization at high speed of the mixture of reaction components is carried out onto a first layer of plastics material already formed on the plane support.

6. A method according to claim 5, characterized in that the layer already formed is produced by reactive casting of a mixture of reaction components adapted for forming a layer possessing energy-absorption properties.

7. A method according to one of claims 4 or 6, characterized in that the layer possessing energy-absorption properties is produced by reactive casting of a reaction mixture of an isocyanate component and of a component having active hydrogens, notably a polyol component.

8. A method according to one of claims 1 to 7, characterized in that a reaction mixture adapted for forming a layer of polyurethane, notably of thermosetting polyurethane, is atomized.

9. A method according to one of claims 1 to 7, characterized in that a reaction mixture adapted for forming a layer of polyurethane having energy-absorption properties is atomized.

10. A method according to one of claims 1 to 9, characterized in that the atomized reaction mixture contains a pouring agent.

11. A method according to one of claims 1 to 10, characterized in that the centrifugal atomization is electrostatic.

12. A method according to one of claims 1 to 11, characterized in that the plane support onto which the centrifugal atomization is carried out is a flexible support, held stretched, forming part of the composition of the sheet of plastics material.

13. A method according to claim 12, characterized in that the stretched, flexible support is polyethylene glycol terephthalate.

14. Apparatus for the continuous production of a sheet of plastics material of high optical quality capable of being used in laminated panes, comprising at least one layer of small thickness, notably a layer possessing surface properties such as resistance to scratching and abrasion, this layer being produced by application of a mixture of reaction components onto a plane support, characterized in that it comprises a plane support (2, 27) movable relative to atomization means for the application of the reaction mixture disposed above the plane support, these means being constituted of at least one atomizer having a rotating head (9), comprising a bowl (16) and a tray (18) rotating at a speed of from 1,000 to 80,000 revolutions per minute, and a fixed part perforated by feed ducts for the components leading into the central part of the tray, and means (11) for the polymerisation of the layer formed.

15. Apparatus according to claim 14, characterized in that the tray carries chicanes (23) and/or the bowl possesses an internal surface (22), the generatrix of which is undulated.

16. Apparatus according to one of claims 14 or 15, characterized in that the assembly is placed in a longitudinal enclosure (1) divided into compartments (4, 7, 10).

17. Apparatus according to one of claims 14 to 16, characterized in that it comprises, in addition, means (33, 35, 36, 39) for the production of a second layer (34).

18. Apparatus according to claim 17, characterized in that the means for the production of the second layer comprise a casting head having a wide, thin slit (36).

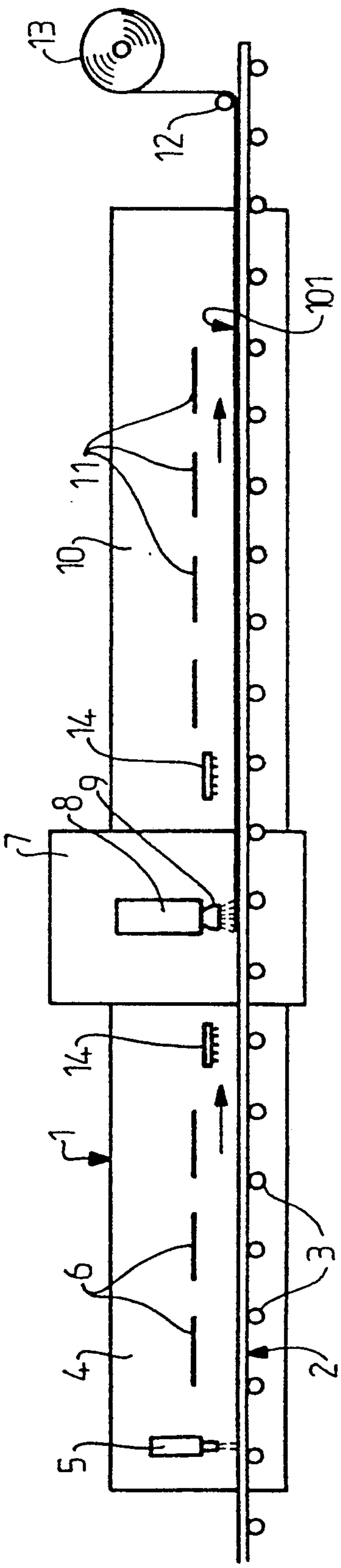


FIG_1

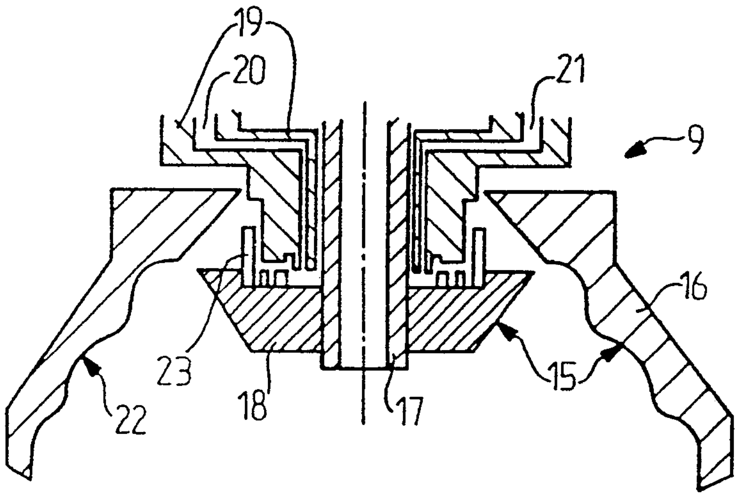


FIG-2

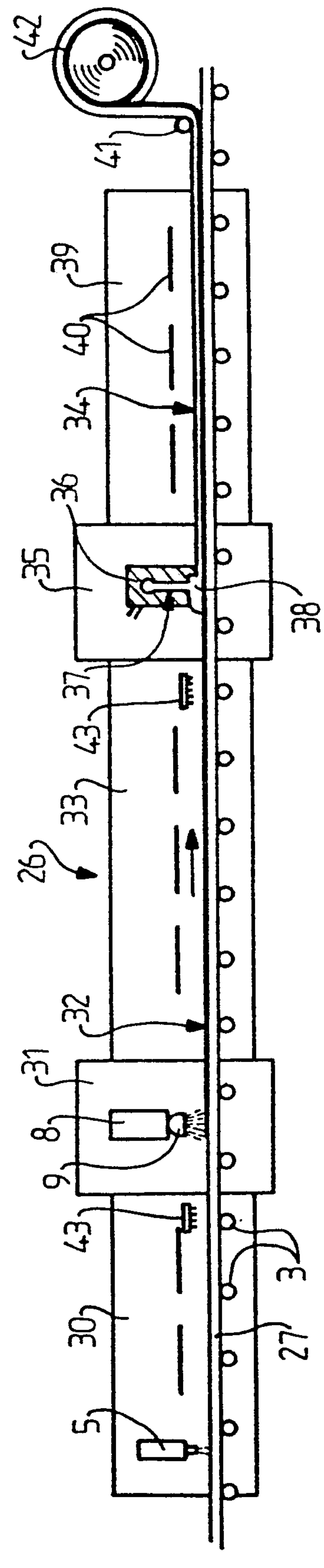


FIG-3